# EUROPÄISCHE PATENTSCHRIFT

(11) **EP 3 260 619 B1**
(45) Veröffentlichungstag und Bekanntmachung des Hinweises auf die Patenterteilung: **26.12.2018**
(21) Anmeldenummer: 17175612.5
(22) Anmeldetag: 13.06.2017
(51) Int. Cl.: E04B 2/96

(54) **BEFESTIGUNGSELEMENT**
ATTACHMENT ELEMENT
ÉLÉMENT DE FIXATION

(30) Priorität: 23.06.2016 DE 202016103336 U
(43) Veröffentlichungstag der Anmeldung: 27.12.2017
(73) Patentinhaber: Raico Bautechnik GmbH, 87772 Pfaffenhausen (DE)
(72) Erfinder: Sepp, Stefan, 88319 Aitrach (DE)
(74) Vertreter: Charrier Rapp & Liebau

(56) Entgegenhaltungen:
- EP-A1- 2 716 836
- DE-U1- 29 809 239
- US-A1- 2008 073 470
- US-A1- 2012 047 842

## Beschreibung

Die Erfindung betrifft ein Befestigungselement zur Befestigung von Anbauteilen an einem Fassadenpfosten oder einem Fassadenriegel einer Pfosten-Riegel-Tragkonstruktion nach dem Oberbegriff des Anspruchs 1.
Derartige Befestigungselemente werden z.B. zur Befestigung von Sonnenschutzelementen an der Außenseite einer Fassade eingesetzt. Sie weisen in der Regel ein zur Fixierung des Befestigungselements an dem Fassadenpfosten bzw. dem Fassadenriegel ausgebildetes Abstützteil und ein durch eine Öffnung an einer Pressleiste nach außen geführtes Halteteil zum Anschrauben von Anbauteilen auf. Die bisher bekannten Befestigungselemente sind üblicherweise in einem Stück aus Edelstahl oder einem anderen Metall hergestellt. Diese weisen jedoch den Nachteil auf, dass sie in einer Pfosten-Riegel-Tragkonstruktion eine Kältebrücke bilden, was im inneren Bereich zu Feuchtigkeit bzw. Kondenswasser führen kann. Patentdokumente DE29809239U1, US2012/047842A1 und US2008/073470A1 offenbaren derartigen Befestigungselemente.

Patentdokument EP2716836A1 offenbart ein Befestigungselement mit den Merkmalen des Oberbegriffes des Anspruchs 1.

Aufgabe der Erfindung ist es, ein Befestigungselement der eingangs genannten Art zu schaffen, bei dem die Gefahr von Kondenswasserbildung verringert werden kann.
Diese Aufgabe wird durch ein Befestigungselement mit den Merkmalen des Anspruchs 1 gelöst. Zweckmäßige Ausgestaltungen und vorteilhafte Weiterbildungen der Erfindung sind Gegenstand der Unteransprüche.
Bei dem erfindungsgemäßen Befestigungselement sind das auf den Schraubkanal eines Tragprofils aufsetzbare Abstützteil und auch das Halteteil aus Kunststoff hergestellt. Dadurch kann eine Kältebrücke unterbrochen und somit die Gefahr von Kondenswasserbildung verringert werden. Außerdem können dadurch die Befestigungselemente kostengünstiger gefertigt werden. In das Halteteil ist ein z.B. als Gewindebuchse oder Gewindestange ausgeführtes Gewindeelement aus Metall eingegossen.

Das Halteteil kann zweckmäßigerweise einteilig mit dem Abstützteil ausgebildet sein. Das Halteteil kann aber auch als separates Teil ausgeführt und mit dem Abstützteil verklebt oder auf andere geeignete Weise fest mit diesem verbunden sein.

In einer besonders stabilen Ausführung können das Abstützteil und/oder das Halteteil aus einem verstärkten Kunststoffmaterial, z.B. aus einem Faserverbund-Kunststoff, bestehen.

Das Abstützteil kann eine quer zum Halteteil verbreiterte Basis zur Befestigung auf dem Schraubkanal und einen durch Seitenstege begrenzten oberen Stützbereich zur Halterung des Halteteils aufweisen. Zwischen den beiden Seitenstegen kann das Halteteil abgestützt gehalten sein.

Zwischen den Seitenstegen können in der Basis zwei oder mehrere Bohrungen für Befestigungsschrauben zur Fixierung des Befestigungselements an einem Tragprofil angeordnet sein. Zur sicheren Abstützung können die Seitenstege eine Trapezform aufweisen. Auch andere Formen sind jedoch möglich.

In einer weiteren vorteilhaften Ausführung kann ein Ende der Basis des Abstützteils in Form eines Hakens ausgebildet sein. Dadurch können beim Zusammensetzen zweier Befestigungsteile vorbestimmte Abstände erreicht werden.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: eine Schnittansicht einer Tragkonstruktion für Fassaden, Fenster und Wintergärten mit einem Tragprofil und einem am Tragprofil fixierten Befestigungselement zur Befestigung von Anbauteilen;
- **Figur 2**: ein Befestigungselement mit einer alternativen Befestigungsmöglichkeit in einer Explosionsdarstellung;
- **Figur 3**: die in Figur 2 gezeigte Befestigungsmöglichkeit in einem montierten Zustand;
- **Figur 4**: ein erstes Ausführungsbeispiel eines Befestigungselements in einer Vorderansicht, Seitenansicht und Draufsicht;
- **Figur 5**: das in Figur 4 gezeigte Befestigungselement in einer Perspektivansicht;
- **Figur 6**: ein zweites Ausführungsbeispiel eines Befestigungselements in einer Vorderansicht, Seitenansicht und Draufsicht;
- **Figur 7**: das in Figur 6 gezeigte Befestigungselement in einer Perspektivansicht;
- **Figur 8**: ein Montagebeispiel mit zwei Befestigungselementen und
- **Figur 9**: mehrere Montagebeispiele für zwei Befestigungselemente.

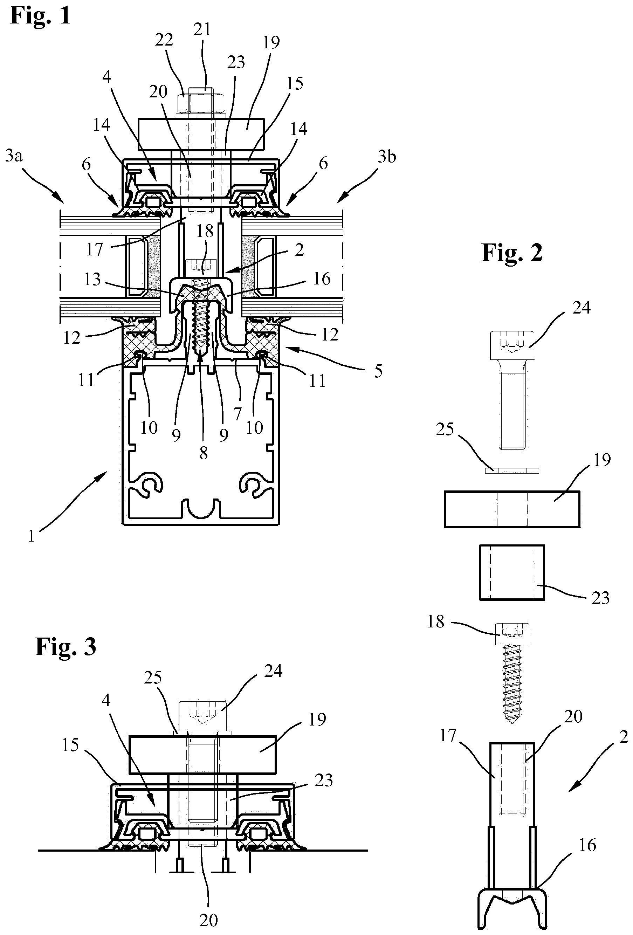

In Figur 1 ist eine Schnittansicht einer Tragkonstruktion für Fassaden, Fenster und Wintergärten mit einem Tragprofil 1 und einem am Tragprofil 1 fixierten Befestigungselement 2 zur Befestigung von Sonnenschutzelementen oder anderen Anbauteilen gezeigt. An dem Tragprofil 1 sind in an sich bekannter Weise zwei hier als Isolierglasscheiben ausgeführte Fassadenelemente 3a und 3b mit Hilfe eines als Pressleiste ausgebildeten Halteprofils 4 über eine Innendichtung 5 und äußere Dichtungen 6 abgedichtet befestigt. Das als Pressleiste ausgebildete Halteprofil 4 ist zur Fixierung der Fassadenelemente 3a und 3b über hier nicht erkennbare Befestigungsschrauben an dem Tragprofil 1 befestigt. Das Tragprofil 1 ist bei der gezeigten Ausführung als Hohlprofil aus Aluminium oder einem anderen geeigneten Material hergestellt. Das Tragprofil 1 kann aber auch aus einem Vollmaterial hergestellt sein und kann eine andere Ausgestaltung aufweisen.

Das Tragprofil 1 enthält an seiner den Fassadenelementen 3a und 3b zugewandten Vorderseite 7 einen nach vorne vorstehenden Schraubkanal 8, der durch zwei nach vorne in den Falzraum zwischen den Fassadenelementen 3a und 3b ragende parallele Stege 9 mit einer inneren Profilierung gebildet wird. Rechts und links des mittigen Schraubkanals 8 sind an der Vorderseite 7 des Tragprofils 1 außerdem Halteelemente 10 zur Fixierung der hier als Hutdichtung ausgebildeten und über den Schraubkanal 8 verlaufenden Innendichtung 5 angeformt. Die Halteelemente 10 sind bei der gezeigten Ausführung als Haltenasen zum Eingriff in Nuten 11 der einteiligen Innendichtung 5 ausgeführt. In entsprechender Weise können die Halteelemente 10 aber z.B. auch als Nuten zur Aufnahme entsprechender Vorsprünge oder Nasen an der Innendichtung 4 ausgebildet sein. Die Innendichtung 5 weist zwei mit Abstand voneinander angeordnete Auflagebereiche 12 für die Fassadenelemente 3a bzw. 3b und einen über den Schraubkanal 8 verlaufenden Abdeckbereich 13 auf. Durch den Abdeckbereich 13 sind die beiden Auflagebereiche 12 miteinander verbunden.

Das als Pressleiste ausgeführte Halteprofil 4 enthält an einer den Fassadenelementen 3a und 3b zugewandten Breitseite zwei parallele Aufnahmekanäle 14, in denen die als Profildichtungen ausgebildeten äußeren Dichtungen 6 gehalten sind. Die äußeren Dichtungen 6 weisen Dichtflächen zur Anlage an der Außenseite der Fassadenelemente 3a und 3b auf. Die Verbindung des Halteprofils 4 mit dem Tragprofil 1 erfolgt über Befestigungsschrauben, die in den Schraubkanal 9 eingeschraubt werden. Auf das Halteprofil 4 kann ein äußeres Abdeckprofil 15 mit einer Art Clipverbindung aufgesetzt werden.

Wie aus Figur 1 hervorgeht, weist das an dem Tragprofil 1 fixierbare Befestigungselement 2 ein über den Abdeckbereich 13 der Innendichtung 5 auf den Schraubkanal 8 des Tragprofils 1 aufsteckbares Abstützteil 16 und ein mit dem Abstützteil 16 fest verbundenes Halteteil 17 auf. Das aus Kunststoff bestehende Abstützteil 16 ist mittels zweier in den Schraubkanal 8 eingeschraubter Schrauben 18 an dem Tragprofil 1 befestigt. Das ebenfalls aus Kunststoff bestehende Halteteil 17 ist zweckmäßigerweise einteilig mit dem Abstützteil 16 ausgeführt. Das Halteteil 17 kann aber auch als gesondertes Bauteil ausgeführt und mit dem Abstützteil 16 verklebt oder auf andere Weise fest mit diesem verbunden sein. An dem durch das Halteprofil 4 und das Abdeckprofil 15 ragenden und nach außen vorstehenden Halteteil 17 kann eine Halterung 19 befestigt werden.

Bei der in Figur 1 gezeigten Ausführung ist in das aus Kunststoff bestehende Halteteil 17 eine aus Metall bestehende Gewindebuchse 20 eingegossen. In die Gewindebuchse 20 ist eine Gewindestange 21 eingeschraubt. In das Halteteil 17 kann aber auch direkt eine Gewindestange 21 bzw. ein Gewindezapfen eingegossen sein. Über eine auf die Gewindestange 21 bzw. den Gewindezapfen aufgeschraubte Mutter 22 und eine an der Außenseite des Halteprofils 4 anliegende, durch eine Öffnung des Abdeckprofils 15 nach außen vorstehende Distanz- bzw. Dichthülse 23 aus Kunststoff kann die Halterung 19 befestigt werden.

In den Figuren 2 und 3 ist eine weitere Möglichkeit zur Befestigung einer Halterung 19 an einem vorstehend beschriebenen Befestigungselement 2 gezeigt. Bei der dort gezeigten Ausführung wird die Halterung 19 über eine in die Gewindebuchse 20 eingeschraubte Schraube 24 und eine Beilagscheibe 25 über eine Distanz- bzw. Dichthülse 23 an dem Befestigungselement 2 fixiert.

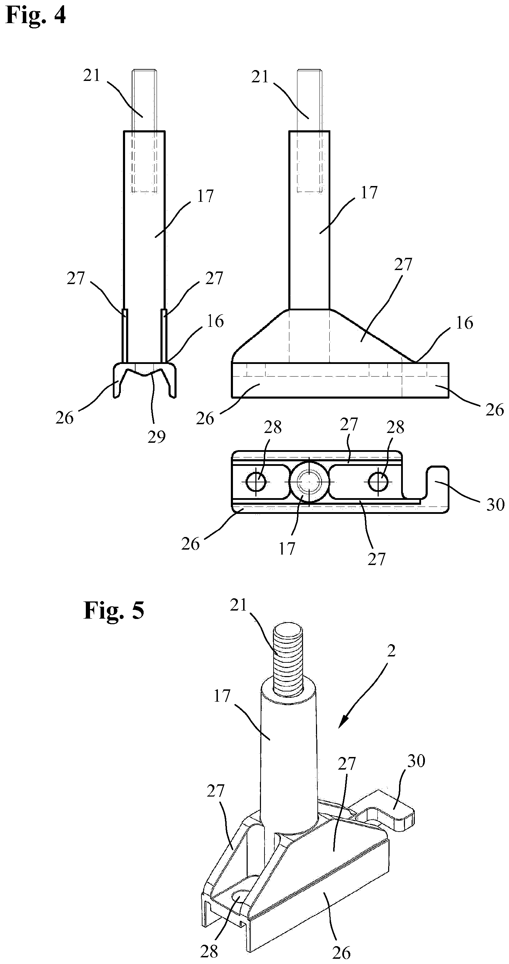

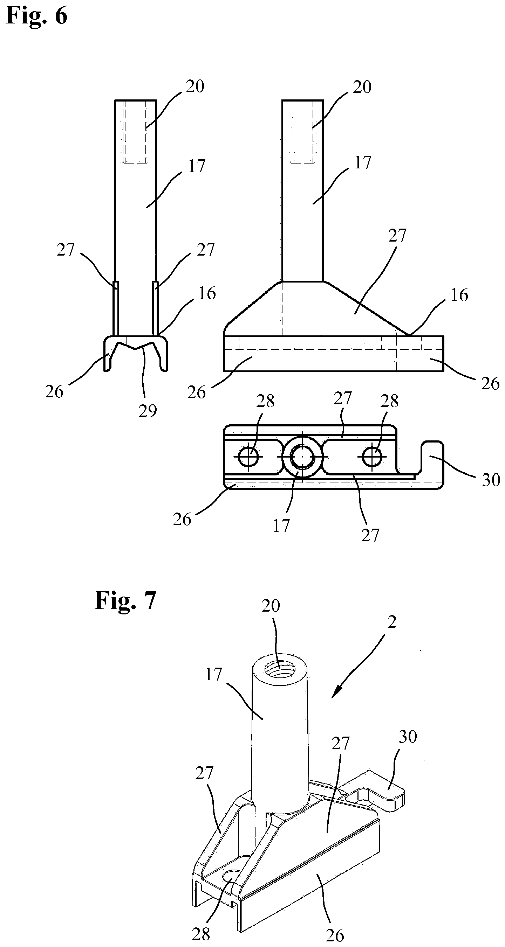

Aus den Figuren 4 bis 7 geht hervor, dass das aus Kunststoff bestehende Abstützteil 16 eine quer zum Halteteil 17 verbreiterte Basis 26 zur Befestigung auf dem Schraubkanal 8 und einen hier durch zwei Seitenstege 27 begrenzten oberen Stützbereich zur sicheren Halterung des Halteteils 17 enthält. Zwischen den beiden hier trapezförmigen Seitenstegen 27 des Abstützteils 16 wird das Halteteil 17 abgestützt gehalten. Zwischen den Seitenstegen 27 sind in der Basis 26 außerdem zwei rechts und links vom Halteteil 17 angeordnete Bohrungen 28 für die Befestigungsschrauben 18 vorgesehen. Die leistenförmige Basis 26 weist einen umgedrehten U-Profil-Querschnitt mit einer an die Außenkontur des Abdeckbereichs 13 der Innendichtung 5 angepassten Innenkontur 29 auf. Dadurch kann das Befestigungselement 2 über den Abdeckteil 13 der Innendichtung 5 auf den Schraubkanal 8 des Tragprofils 1 aufgesetzt werden. Das eine Ende der Basis 26 ist in Form eines Hakens 30 ausgebildet. Durch diesen Haken 30 wird bei einer Montage zweier Befestigungselemente 2 die Möglichkeit zum Einhaken bzw. Verrasten geschaffen, wodurch sich beim Zusammensetzen ein definierter Abstand ergibt.

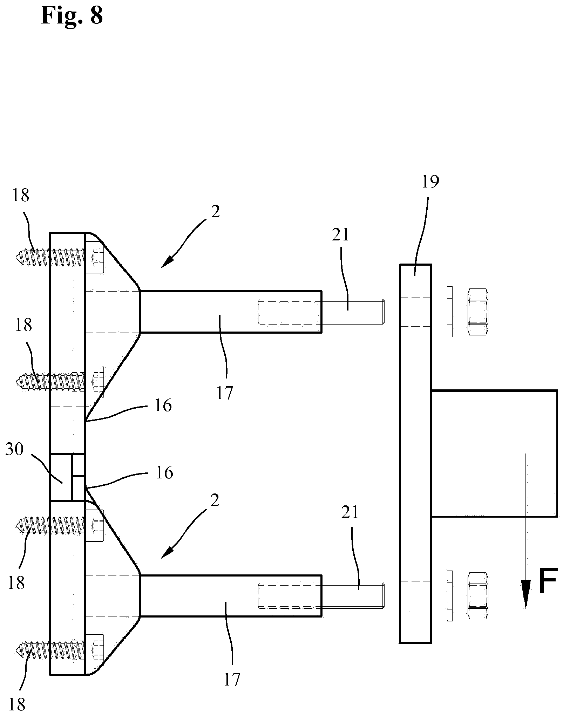

In Figur 8 ist ein Montagebeispiel mit zwei paarweise montierten Befestigungselementen 2 zur Befestigung einer Halterung 19 für eine Beschattungsvorrichtung gezeigt. Die beiden Befestigungselemente 2 können über die Haken 30 miteinander verrastet und über die Befestigungsschrauben 18 in einem vorgegebenen Abstand an einem Tragprofil befestigt werden. An den beiden Gewindestangen 21 kann dann die Halterung 19 fixiert werden.

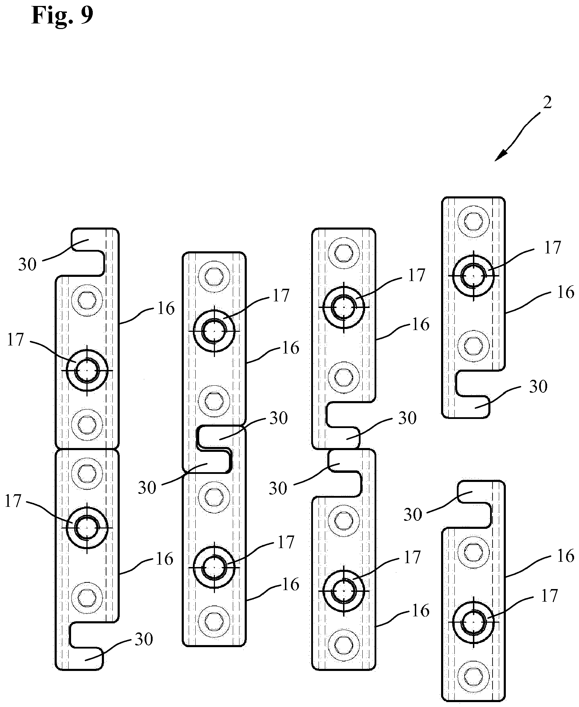

Aus Figur 9 geht hervor, dass durch unterschiedliche Anordnung zweier vorstehend beschriebener Befestigungselemente 2 auch unterschiedliche vorgegebene Abstände erreicht werden können. Werden die beiden Befestigungselemente 2 gemäß der linken Darstellung so aneinander gelegt, dass diese mit ihren den Haken 30 gegenüberliegenden Enden der Basis 16 aneinander anliegen, kann ein kleinerer vorgegebener Abstand zwischen den Halteteilen 17 erreicht werden. Werden die Befestigungselemente 2 dagegen mit ihren jeweiligen Haken 30 verhakt, wird ein etwas größerer vorgegebener Abstand zwischen den Halteteilen 17 erreicht.

Ein noch größerer vorgegebener Abstand zwischen den Halteteilen 17 kann dadurch erreicht werden, dass die Befestigungselemente 2 mit ihren hakenseitigen Enden ohne gegenseitigen Eingriff aneinander anliegen. Ohne Anlage oder Eingriff sind gemäß der rechten Darstellung dagegen beliebige frei wählbare Abstände zwischen den Halteteilen 17 erreichbar.

## Patentansprüche

1. Befestigungselement (2) zur Befestigung von Anbauteilen an einem Tragprofil (1) einer Pfosten-Riegel-Tragkonstruktion mit einem auf einen Schraubkanal (8) eines Tragprofils (1) aufsetzbaren Abstützteil (16) und einem mit dem Abstützteil (16) fest verbundenen Halteteil (17), wobei das Abstützteil (16) und das Halteteil (17) aus einem Kunststoffinaterial bestehen, **dadurch gekennzeichnet dass** in das Halteteil (17) ein Gewindeelement (20, 21) aus Metall eingegossen ist.

2. Befestigungselement (2) nach Anspruch 1, **dadurch gekennzeichnet, dass** das Halteteil (17) einteilig mit dem Abstützteil (16) ausgebildet ist.

3. Befestigungselement (2) nach Anspruch 1 oder 2, **dadurch gekennzeichnet, dass** das Abstützteil (16) und/oder das Halteteil (17) aus einem verstärkten Kunststoffmaterial bestehen.

4. Befestigungselement (2) nach einem der Ansprüche 1 bis 3, **dadurch gekennzeichnet, dass** das Abstützteil (16) eine quer zum Halteteil (17) verbreiterte Basis (26) zur Befestigung auf dem Schraubkanal (8) und einen durch Seitenstege (27) begrenzten oberen Stützbereich zur Halterung des Halteteils (17) enthält.

5. Befestigungselement (2) nach Anspruch 4, **dadurch gekennzeichnet, dass** das Halteteil (17) zwischen den Seitenstegen (27) abgestützt ist.

6. Befestigungselement (2) nach Anspruch 4 oder 5, **dadurch gekennzeichnet, dass** zwischen den Seitenstegen (27) in der Basis (26) zwei oder mehrere Bohrungen (28) für Befestigungsschrauben (18) angeordnet sind.

7. Befestigungselement (2) nach einem der Ansprüche 4 bis 6, **dadurch gekennzeichnet, dass** die Seitenstege (27) eine Trapezform aufweisen.

8. Befestigungselement (2) nach einem der Ansprüche 4 bis 7, **dadurch gekennzeichnet, dass** die Basis (26) einen umgedrehten U-Profil-Querschnitt aufweist.

9. Befestigungselement (2) nach einem der Ansprüche 4 bis 8, **dadurch gekennzeichnet, dass** die Basis (26) eine an die Außenkontur eines Abdeckteils (13) einer Innendichtung (5) angepasste Innenkontur (29) enthält.

10. Befestigungselement (2) nach einem der Ansprüche 4 bis 9, **dadurch gekennzeichnet, dass** ein Ende der Basis (26) in Form eines Hakens (30) ausgebildet ist.

## Claims

1. Attachment element (2) for attaching mounting parts on a supporting profile (1) of a post-bolt supporting structure with a supporting part (16) which can be placed on a screw channel (8) of a supporting profile (1) and a holding part (17) firmly connected to the supporting part (16), wherein the supporting part (16) and the holding part (17) consist of a plastic material, **characterised in that** a threaded element (20, 21) made of metal is embedded into the holding part (17).

2. Attachment element (2) according to claim 1, **characterised in that** the holding part (17) is designed to be integral with the supporting part (16).

3. Attachment element (2) according to claim 1 or 2, **characterised in that** the supporting part (16) and/or the holding part (17) consist of a reinforced plastic material.

4. Attachment element (2) according to one of claims 1 to 3, **characterised in that** the supporting part (16) contains a base (26) which is widened transversely to the holding part (17) for attachment to the screw channel (8) and an upper supporting region defined by side bars (27) for mounting of the holding part (17).

5. Attachment element (2) according to claim 4, **characterised in that** the holding part (17) is supported between the side bars (27).

6. Attachment element (2) according to claim 4 or 5, **characterised in that** two or more holes (28) for attachment screws (18) are arranged between the side bars (27) in the base (26).

7. Attachment element (2) according to one of claims 4 to 6, **characterised in that** the side bars (27) have a trapezium shape.

8. Attachment element (2) according to one of claims 4 to 7, **characterised in that** the base (26) has an inverted U-profile cross-section.

9. Attachment element (2) according to one of claims 4 to 8, **characterised in that** the base (26) contains an inner contour (29) adapted to the outer contour of a cover part (13) of an inner seal (5).

10. Attachment element (2) according to one of claims 4 to 9, **characterised in that** one end of the base (26) is designed in the form of a hook (30).

## Revendications

1. Elément de fixation (2) servant à fixer des pièces rapportées au niveau d'un profil porteur (1) d'une structure porteuse à montants et à traverses avec une pièce d'appui (16) pouvant être placée sur un canal de vissage (8) d'un profil porteur (1) et une pièce de maintien (17) reliée de manière solidaire à la pièce d'appui (16), dans lequel la pièce d'appui (16) et la pièce de maintien (17) sont constituées d'un matériau en matière plastique, **caractérisé en ce qu'**un élément fileté (20, 21) composé de métal est coulé dans la pièce de maintien (17).

2. Elément de fixation (2) selon la revendication 1, **caractérisé en ce que** la pièce de maintien (17) est réalisée en une seule partie avec la pièce d'appui (16).

3. Elément de fixation (2) selon la revendication 1 ou 2, **caractérisé en ce que** la pièce d'appui (16) et/ou la pièce de maintien (17) sont constituées d'un matériau en matière plastique renforcé.

4. Elément de fixation (2) selon l'une quelconque des revendications 1 à 3, **caractérisé en ce que** la pièce d'appui (16) contient une base (26) élargie de manière transversale par rapport à la pièce de maintien (17), destinée à être fixée sur le canal de vissage (8) et une zone de soutien supérieure, délimitée par des entretoises latérales (27), servant à la fixation de la pièce de maintien (17).

5. Elément de fixation (2) selon la revendication 4, **caractérisé en ce que** la pièce de maintien (17) prend appui entre les entretoises latérales (27).

6. Elément de fixation (2) selon la revendication 4 ou 5, **caractérisé en ce que** deux ou plusieurs alésages (28) pour des vis de fixation (18) sont disposés entre les entretoises latérales (27) dans la base (26).

7. Elément de fixation (2) selon l'une quelconque des revendications 4 à 6, **caractérisé en ce que** les entretoises latérales (27) présentent une forme trapézoïdale.

8. Elément de fixation (2) selon l'une quelconque des revendications 4 à 7, **caractérisé en ce que** la base (26) présente une section transversale à profil en U renversée.

9. Elément de fixation (2) selon l'une quelconque des revendications 4 à 8, **caractérisé en ce que** la base (26) contient un contour intérieur (29) adapté au contour extérieur d'une partie de recouvrement (13) d'un joint d'étanchéité intérieur (5).

10. Elément de fixation (2) selon l'une quelconque des revendications 4 à 9, **caractérisé en ce qu'**une extrémité de la base (26) est réalisée sous la forme d'un crochet (30).
